# EUROPEAN PATENT APPLICATION

(11) **EP 4 819 700 A1**
(43) Date of publication of application: **07.10.2026**
(21) Application number: 24917693.4
(22) Date of filing: 17.01.2024
(51) Int. Cl.: H04W 52/02

(54) **MEASUREMENT METHODS AND APPARATUSES, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN)
(74) Representative: Novagraaf Technologies
(86) International application number: PCT/CN2024/072776
(87) International publication number: WO 2025/152067

(57) **Abstract**

Measurement methods and apparatuses, a device, and a storage medium, relating to the technical field of communications. A method is executed by a terminal device, the method comprising: receiving a measurement reference signal by means of a wake-up radio (WUR), the measurement reference signal being used for measuring the signal quality of a serving cell (810); and determining a measurement result on the basis of the measurement reference signal, the measurement result being used for representing the signal quality of the serving cell (820). Each time the signal quality of the serving cell is measured, using the WUR to receive the measurement reference signal does not need to wake up a main radio, or interrupt the data reception and measurement of the main radio, thereby reducing effects on the data reception or measurement of the main radio and reducing the power consumption of the terminal device.

## Description

### TECHNICAL FIELD

The embodiments of the present disclosure relate to the technical field of communication technology, and particularly to a measurement method, an apparatus, a device, and a storage medium.

### RELATED ART

To achieve power saving in terminal devices, wake-up receiver (WUR) is introduced in relevant technologies to receive wake-up signals. The wake-up receiver can be passive or powered by the terminal device. Regardless of the power supply method, the wake-up receiver significantly reduces power consumption compared to the traditional receiver (also known as the main receiver) of the terminal device. How to further achieve power saving in terminal devices with the cooperation of WUR remains to be discussed and studied.

### SUMMARY

The embodiments of the present disclosure provide a measurement method, an apparatus, a device, and a storage medium. The technical solution is as follows.

According to one aspect of the embodiments of the present disclosure, a measurement method is provided. The method is performed by a terminal device and includes: receiving a measurement reference signal through a WUR, wherein the measurement reference signal is used to measure a signal quality of the serving cell; and determining a measurement result based on the measurement reference signal, wherein the measurement result is used to represent the signal quality of the serving cell.

According to one aspect of the embodiments of the present disclosure, a measurement method is provided. The method is performed by a network device and includes: transmitting a measurement reference signal to a terminal device, wherein the measurement reference signal is used to measure a signal quality of a serving cell, and the measurement reference signal is received by the terminal device using a WUR.

According to one aspect of the embodiments of the present disclosure, a measurement apparatus is provided. The apparatus includes: a receiving module, configured to receive a measurement reference signal through a WUR, wherein the measurement reference signal is used to measure the signal quality of a serving cell; and a processing module, configured to determine a measurement result based on the measurement reference signal, wherein the measurement result is used to represent the signal quality of the serving cell.

According to one aspect of the embodiments of the present disclosure, a measurement apparatus is provided. The apparatus includes: a transmitting module, configured to transmit a measurement reference signal to a terminal device, wherein the measurement reference signal is used to measure a signal quality of a serving cell, and the measurement reference signal is received by the terminal device using a WUR.

According to one aspect of the embodiments of the present disclosure, a communication device is provided, which includes a processor and a memory. The memory stores a computer program, and the processor executes the computer program to perform the aforementioned measurement method. The communication device is a terminal device, or alternatively, the communication device is a network device.

According to one aspect of the embodiments of the present disclosure, a computer-readable storage medium is provided, in which a computer program is stored. The computer program is configured to be executed by a processor to perform the aforementioned measurement method.

According to one aspect of the embodiments of the present disclosure, a chip is provided, which includes a programmable logic circuit and/or program instructions, and is used to perform the aforementioned measurement method when the chip is operated.

According to one aspect of the embodiments of the present disclosure, a computer program product is provided, which includes computer instructions stored in a computer-readable storage medium. The processor reads and executes the computer instructions from the computer-readable storage medium to perform the aforementioned measurement method.

The technical solutions according to the embodiments of the present disclosure may achieve the following beneficial effects.

By receiving the measurement reference signal through the WUR, there is no need to wake up the main receiver or interrupt data reception and measurement of the main receiver every time the signal quality of the serving cell is measured. This reduces the impact on the main receiver's data reception or measurement, while also reducing the power consumption of the terminal device.

### BRIEF DESCRIPTION OF DRAWINGS

FIG. 1 is a schematic diagram of a network architecture according to some embodiments of the present disclosure;
FIG. 2 is a block diagram of a receiver system based on zero-power wake-up, according to some embodiments of the present disclosure;
FIG. 3 is a schematic diagram of the On-Off Keying (OOK) modulation process according to some embodiments of the present disclosure;
FIG. 4 is a schematic diagram of a Multi-Carrier-OOK (MC-OOK) signal generated through multi-carrier, according to some embodiments of the present disclosure;
FIG. 5 illustrates an example of the use of SMTC (SSB (Synchronization Signal and PBCH Block) Measurement Timing Configuration) according to some embodiments of the present disclosure;
FIG. 6 is a schematic diagram of a low mobility determination criteria according to some embodiments of the present disclosure;
FIG. 7 is a schematic diagram of radio resource management (RRM) measurement of terminal devices in a RRC (radio resource control) connected state according to some embodiments of the present disclosure;
FIG. 8 is a flowchart of a measurement method according to some embodiments of the present disclosure;
FIG. 9 is a schematic diagram of a channel bandwidth of a terminal device according to some embodiments of the present disclosure;
FIG. 10 is a block diagram of a measurement apparatus according to some embodiments of the present disclosure;
FIG. 11 is a block diagram of a measurement apparatus according to some other embodiments of the present disclosure;
FIG. 12 is a schematic structural diagram of a terminal device according to some embodiments of the present disclosure;
FIG. 13 is a schematic structural diagram of a network device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with the evolution of the network architecture and emergence of new service scenarios, the technical solutions according to the embodiments of the present disclosure are also applicable to similar technical problems.

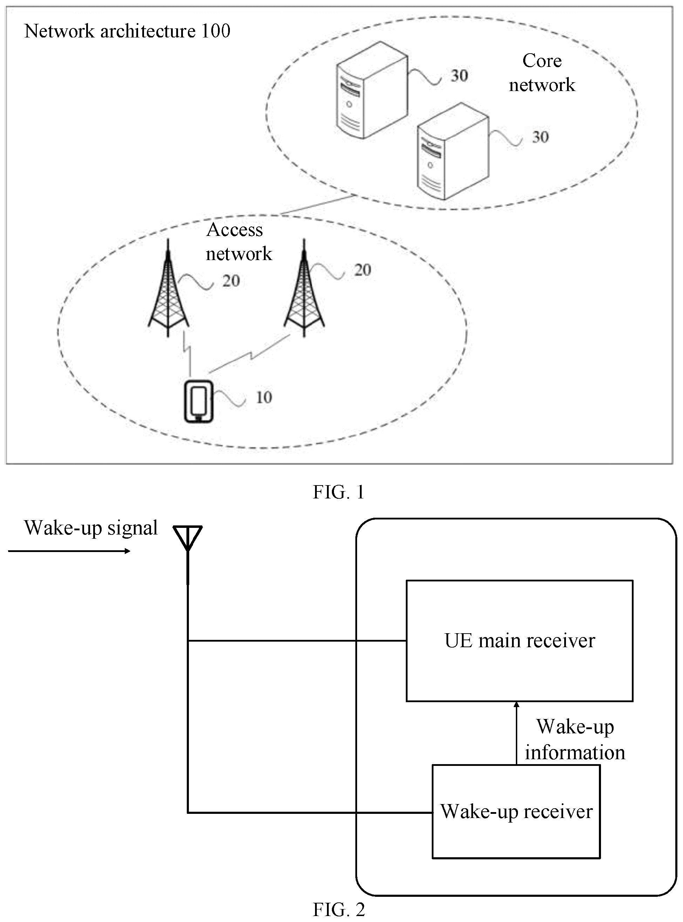

Please refer to FIG. 1, which illustrates a schematic diagram of a network architecture 100 according to some embodiments of the present disclosure. The network architecture 100 may include: a terminal device 10, an access network device 20, and a core network element 30.

The terminal device 10 can refer to User Equipment (UE), station (STA), access terminal, user unit, user station, mobile station, mobile site, remote station, remote terminal, mobile device, wireless communication device, user agent, or user device. In some embodiments, the terminal device 10 can also be a cellular phone, cordless phone, Session Initiation Protocol (SIP) phone, Wireless Local Loop (WLL) station, Personal Digital Assistant (PDA), handheld device with wireless communication function, computing device, or other processing device connected to a wireless modem, in-vehicle device, wearable device, terminal device in 5^{th} Generation System (5GS), or terminal device in the future evolved Public Land Mobile Network (PLMN). The embodiments of the present disclosure are not limited to these. For ease of description, the above-mentioned devices are collectively referred to as terminal devices. The number of terminal devices 10 is usually a plurality, and one or more terminal devices 10 can be distributed within the cell managed by each access network device 20. The terminal device can also be referred to simply as terminal or UE, and those skilled in the art can understand its meaning.

The access network device 20 is a device deployed in the access network to provide the wireless communication function for the terminal device 10. The access network device 20 can include various forms of a macro base station, a micro base station, a relay station, an AP (access point), and so on. In systems employing different radio access technologies, the names of devices with access network device function may vary. For example, in a 5G New Radio (NR) system, it is referred to as a gNodeB or Next Generation Node B (gNB). As communication technology evolves, the term "access network device" may change. For ease of description, in the embodiments of the present disclosure, the aforementioned devices that provide wireless communication function for the terminal device 10 are collectively referred to as access network devices. In some embodiments, a communication relationship can be established between the terminal device 10 and the core network element 30 through the access network device 20. Illustratively, in an Long-Term Evolution (LTE) system, the access network device 20 can be an Evolved Universal Terrestrial Radio Access Network (EUTRAN) or one or more eNodeBs within the EUTRAN; in a 5G NR system, the access network device 20 can be a Radio Access Network (RAN) or one or more gNBs within the RAN. In the embodiments of the present disclosure, unless otherwise specified, the term "network device" refers to the access network device 20, such as a base station.

The core network element 30 is a network element deployed in the core network. The main functions of the core network element 30 are to provide user connections, manage users, and bear services, serving as a bearer network providing an interface to connect to external networks. For example, the core network elements in the 5G NR system may include Access and Mobility Management Function (AMF) entity, User Plane Function (UPF) entity, Session Management Function (SMF) entity, and other network elements.

In some embodiments, the access network device 20 and the core network element 30 communicate with each other via an air interface technology, such as the NG interface in the 5G NR system. The access network device 20 and the terminal device 10 communicate with each other via an air interface technology, such as the Uu interface.

The "5G NR system" in the embodiments of the present disclosure can also be referred to as a 5G system or an NR system, but those skilled in the art can understand its meaning. The technical solutions described in the embodiments of the present disclosure can be applied to LTE systems, 5G NR systems, subsequent evolution systems of 5G NR systems (such as Beyond 5G (B5G) systems, 6G systems (6^{th} Generation Systems, sixth-generation mobile communication systems)), and other communication systems such as Narrow Band Internet of Things (NB-IoT) systems. The present disclosure does not limit this.

In the embodiments of the present disclosure, the network device can provide services for a cell, and the terminal device communicates with the network device through transmission resources (such as frequency domain resources, or spectrum resources) on the carrier used by the cell. The cell can be the cell corresponding to the network device (such as a base station), and the cell can belong to a macro base station or a base station corresponding to a small cell. Here, the small cell can include: metro cell, micro cell, pico cell, femto cell, etc. These small cells have the characteristics of small coverage and low transmission power, and are suitable for providing high-rate data transmission services.

Before introducing the technical solutions of the present disclosure, some relevant technical knowledge involved in the present disclosure will be introduced and explained first. The following relevant technologies can be combined with the technical solutions of the embodiments of the present disclosure as optional solutions, and all of them fall within the protection scope of the embodiments of the present disclosure. The embodiments of the present disclosure include at least some of the following contents.

### 1) Energy saving of terminal devices based on wake-up receivers

To further conserve power for UEs, related arts have introduced a wake-up receiver (WUR) to receive wake-up signals. The WUR features extremely low cost, complexity, and power consumption, primarily receiving wake-up signals through an envelope detection-based approach. Therefore, the wake-up signal (WUS) received by the WUR differs from the modulation method and waveform of signals carried by the standard-defined Physical Downlink Control Channel (PDCCH). The wake-up signal is mainly an envelope signal acquired by performing Amplitude Shift Keying (ASK) modulation on the carrier signal. The demodulation of the envelope signal is also primarily driven by the energy provided by the wireless radio frequency signal to power a low-power circuit, making it potentially passive. The WUR can also be powered by the terminal device. Regardless of the power supply method, this receiver significantly reduces power consumption compared to traditional UE receivers. The WUR can be integrated with the UE as an additional module of the UE receiver, or it can function independently as a wake-up function module of the UE.

The block diagram of the receiver system based on zero-power wake-up is illustrated in FIG. 2. The wake-up receiver receives the wake-up signal. If it is necessary for the UE to turn on the receiver, the UE can be instructed to turn on the main receiver. Otherwise, the main receiver of the UE can be in a turn-off state.

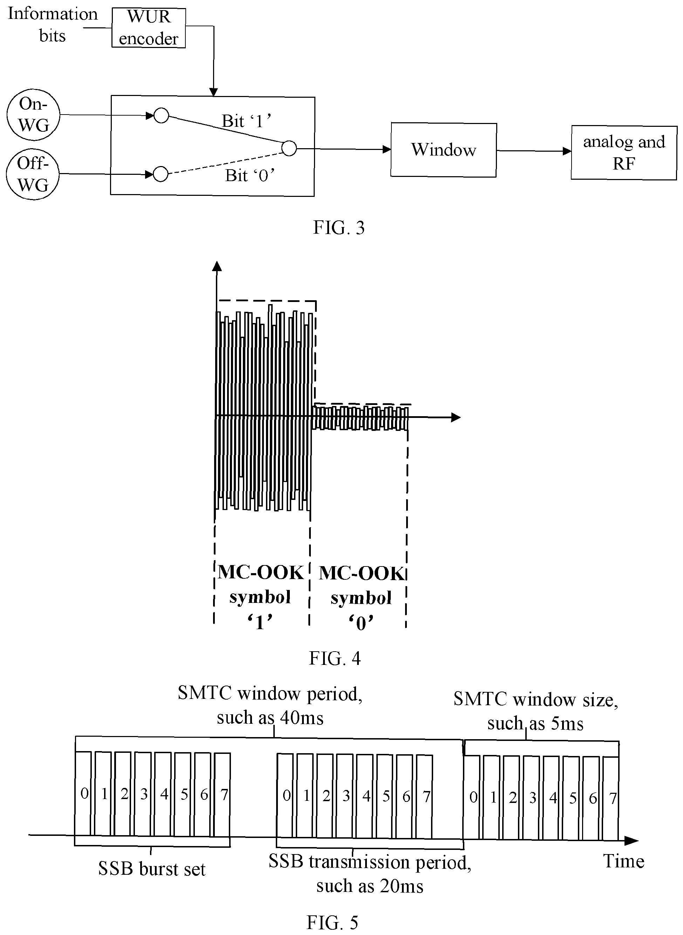

The signal received by the wake-up receiver can be referred to as a WUR signal, which employs a relatively simple modulation method to meet the reception of a wake-up receiver with extremely low power consumption and complexity. The wake-up signal (WUS) is one type of WUR signal. The generation method of the WUR signal, like the wake-up signal in related arts, employs On-Off Keying (OOK) modulation. The modulation principle of OOK is to modulate the amplitude of the carrier signal to non-zero and zero values, corresponding to On and Off, respectively, to represent information bits. OOK is also referred to as Binary Amplitude Shift Keying (2ASK). The OOK modulation process is illustrated in FIG. 3.

The aforementioned OOK signal is generated through multi-carrier modulation, hence it is referred to as MC-OOK signal. The generation of MC-OOK signal can utilize existing multi-carrier modulations such as Orthogonal Frequency Division Multiplexing (OFDM) to produce OOK signals, maintaining good compatibility with existing OFDM systems and reducing the transmitter complexity introduced by implementing WUR signals. FIG. 4 illustrates the schematic diagram of MC-OOK signals generated through multi-carrier modulation. By mapping corresponding amplitude values to a plurality of subcarriers in the frequency domain, the waveform of the time-domain signal acquired through Inverse Discrete Fourier Transform (IDFT) approximates the waveform formed by ASK modulation, where bit 1 is represented by the high level of the signal and bit 0 is represented by the low level of the signal.

### 2) RRM measurement

For wireless mobile communication systems, accurate measurements of cell quality and beam quality are the foundation for effectively executing radio resource management and mobility management. For 5G NR, two major types of reference signals are currently considered as measurement reference signals: SSB and Channel-State Information Reference Signal (CSI-RS).

SMTC is the time-domain resource configuration information of SSB measurement, and it is also an important concept newly introduced in 5G NR measurement configuration. It is mainly used to configure a set of measurement time windows based on SSB measurement. The size, position, period, and other parameters of these windows can be adjusted through configuration parameters. An example is illustrated in FIG. 5.

It should be noted that SMTC is configured respectively for each frequency point. When the UE performs measurements, it has a set of SMTC configurations for each measurement frequency point to indicate the available measurement window information on that frequency point. However, this restriction is gradually being relaxed in protocol discussions. In related arts, to match different synchronization signal and PBCH block periods in different cells, it is allowed to configure two sets of SMTC parameters for measurements in a given cell during connected-state co-frequency measurements. For example, in addition to the basic SMTC configuration, a denser set of measurement windows can be configured for use by the serving cell and cells indicated in a specific cell list. Later, the maximum number of SMTC configurations on each frequency point in idle-state measurements was also increased to two, to further meet the flexibility requirements of network operations.

In addition, high-level signaling can indicate specific configuration information for specific measurement reference signal through Reference Signal Config parameters. For SSB-based measurements, the to be measured SSB indication (SSB-ToMeasure) uses a bit bitmap to indicate the position information of the actually transmitted SSBs in the SSB burst set. The UE can clearly know through ssb-ToMeasure which SSB candidate positions actually transmitted SSBs and which SSB candidate positions did not transmit SSBs. The UE does not need to perform measurements at positions where no SSBs were transmitted, thus achieving energy saving for the UE.

For CSI-RS-based measurements, the base station can configure one or more CSI-RS resources for UE measurements through high-level signaling. First, taking the cell as a unit, high-level signaling can provide cell-level CSI-RS configuration parameters, such as cell ID (Identity Document), measurement bandwidth of the cell, resource density, and other information. Furthermore, since a plurality of CSI-RS resources can be configured for each cell, further parameter configurations also provide configuration information at the individual CSI-RS resource level, such as specific CSI-RS indices, the time and frequency domain position information occupied by the CSI-RS resource, and the sequence generation method.

In the NR system, the mobility management of UEs mainly includes the cell selection and reselection processes in the RRC_IDLE (RRC idle state) or RRC_INACTIVE (RRC inactive state), as well as the handover process for UEs in the connected state.

### 1. Mobility management in RRC_IDLE or RRC_INACTIVE state

For UEs in RRC_IDLE or RRC_INACTIVE state, the prerequisite for being able to camp on a certain cell is that the signal quality of that cell (including Reference Signal Received Power (RSRP) and Reference Signal Received Quality (RSRQ) measurement results) meets the cell selection S criterion. After selecting an appropriate cell, the UE will continuously perform cell reselection evaluation. The measurements required for evaluating cell reselection are categorized and carried out based on the reselection priority of each frequency point. Specifically:
- For high-priority frequency points, neighbor cell measurements are always performed.
- For the same-frequency cell, when both the RSRP and RSRQ values of the serving cell are higher than the network-configured same-frequency measurement threshold, the UE can stop measuring the same-frequency neighbor cells. Otherwise, it is required to continue the measurements.
- For both same-priority and low-priority frequency points, when the RSRP and RSRQ values of the serving cell are both higher than the inter-frequency measurement threshold configured by the network, the UE can stop measuring neighbor cells for the same-priority and low-priority frequency points. Otherwise, measurements need to be conducted.

After acquiring a plurality of candidate cells through measurement, the process of determining the target cell for cell reselection is basically the same as in the LTE system, adopting the principle of preferential reselection of cells on high-priority frequency points. Specifically:
- For cell reselection on high-priority frequency points, it is required that the signal quality be above a certain threshold for a specified duration, and that the UE camps on the source cell for no less than 1 second.
- For cell reselection on the same frequency and same-priority frequency point, the R criteria (sorted by RSRP) needs to be met. The signal quality of the new cell is better than that of the current cell for a specified duration, and the UE camps on the source cell for at least 1 second.
- For cell reselection on low-priority frequency points, it requires that there are no high-priority or same-priority frequency point cells meeting the requirements, the signal quality of the source cell is below a certain threshold, the signal quality of the cell on the low-priority frequency point is above a certain threshold for a specified duration, and the UE camps on the source cell for no less than 1 second.

During the cell reselection process on the same frequency and same-priority frequency point, when a plurality of candidate cells meet the requirements, the LTE system selects the best cell as the target cell for reselection through RSRP ranking. Considering that UEs in the NR system access cells through beams, to increase the probability that the UE accesses successfully through good beams, when determining the target cell, both the signal quality of the cell and the number of good beams need to be considered. To achieve this goal, the NR system first selects the best few cells with similar signal quality before choosing the target cell, and then selects the cell with the maximum number of good beams as the target cell.

### 2. Mobility management in the connected state

The mobility management of UEs in the connected state is primarily achieved through a network-controlled handover process. The NR system inherits the handover procedure of the LTE system, which mainly includes three stages: handover preparation, handover execution, and handover completion.

In the handover preparation stage, upon receiving the measurement report transmitted by the UE, the source base station will make a handover decision and initiate a handover request to the target base station. If the target cell accepts the request, it will transmit a handover response message to the source base station through the inter-base station interface. This message contains the configuration information of the target cell, i.e., the handover command.

During the handover execution stage, the source base station transmits the handover command to the UE. Upon receiving the handover command, the UE disconnects from the source cell, starts establishing downlink synchronization with the target cell, and then initiates a random access process to the target cell using the random access resources configured in the handover command. Upon completion of the random access, the UE reports a handover complete message. During the UE's access to the target cell, the source base station forwards the data packets transmitted by the UPF to the target base station and transmits the status information of the uplink and downlink data packet transmission and reception in the source cell before forwarding to the target base station.

In the handover completion stage, the target base station transmits a path switch request to the AMF, requesting the AMF to switch the data packet transmission path from the UPF to the access network to the target base station side. Once the AMF responds to the request, it indicates that the path switch is successful, and the target base station can instruct the source base station to release the UE's context information. At this point, the entire UE connection is handed over to the target cell.

### 3. Relaxation mechanism for RRM measurement in the non-connected state

Terminal devices in a non-connected state need to perform RRM measurements on the serving cell and other neighbor cells based on network configurations to support mobility operations, such as cell reselection. In related arts, considering energy saving for terminal devices, when the channel quality of the serving cell is good, the terminal device may not initiate RRM measurements for the same-frequency frequency point and for equal-priority or low-priority different frequency/technology points. Meanwhile, the measurement interval of the RRM measurement for high-priority different frequency/technology points can be increased. Specifically:
- When the RSRP of the terminal device in the serving cell is higher than the configured SIntraSearchP (a high-level configuration threshold parameter) and the RSRQ of the terminal device in the serving cell is higher than SIntraSearchQ, the terminal device can refrain from initiating RRM measurements for neighbor cells on the same-frequency frequency point.
- When the RSRP of the terminal device on the serving cell is higher than SnonIntraSearchP and the RSRQ of the terminal device on the serving cell is higher than SnonIntraSearchQ, the terminal device can refrain from initiating RRM measurements for low-priority and equal-priority frequency neighbor cells of different frequencies and different systems. Meanwhile, for high-priority frequency points of different frequencies and different systems, the terminal device can initiate relaxed RRM measurements.

For terminal devices that require RRM measurements on neighbor cells, it is necessary to introduce a relaxation mechanism for RRM measurements on neighbor cells to further meet the power-saving requirements of the terminal devices.

In related arts, two sets of measurement relaxation criteria have been introduced for RRM measurements of non-connected terminal devices, namely the "terminal device not located at the cell edge" criterion and the "low mobility" criterion. Both sets of criteria are evaluated based on the "cell-level" measurement results of the terminal device on the serving cell. The following provides an introduction to these two criteria respectively.

### 1. "Terminal device is not located at the edge of the cell" criterion

For this criterion, the network will configure an RSRP threshold, and additionally, an RSRQ threshold can also be configured. When the RSRP of the terminal device on the serving cell is above this RSRP threshold, and when the network has configured the RSRQ threshold and the RSRQ of the terminal device on the serving cell is above this RSRQ threshold, it is considered that the terminal device meets the criterion of "the terminal device is not located at the cell edge".

The RSRP threshold for the criterion "terminal device not located at cell edge" configured by the network needs to be less than SIntraSearchP and SnonIntraSearchP. If the network also configures the RSRQ threshold for the criterion "terminal device not located at cell edge", then the RSRQ threshold for this criterion needs to be less than SIntraSearchQ and SnonIntraSearchQ.

### 2. "Low mobility" criterion

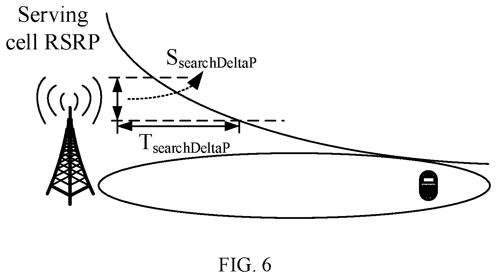

For this criterion, as illustrated in FIG. 6, the network configures an evaluation duration T_{SearchDeltaP} for RSRP changes and a RSRP change threshold S_{SearchDeltaP}. When the RSRP change amount of the terminal device on the serving cell is less than S_{SearchDeltaP} within a duration of T_{SearchDeltaP}, it is considered that the terminal device meets the "low mobility" criterion.

It should be noted that the "low mobility" criterion has been enhanced in related arts. The main change is the introduction of a second threshold S_{SearchDeltaP}, and a second T_{SearchDelta}, to support further relaxation (reflected in a larger scaling factor) in the measurement of low-mobility scenarios (such as stationary terminal devices or quasi-stationary terminal devices).

After completing cell selection/reselection, the terminal device needs to perform normal RRM measurements for at least a duration of T_{SearchDeltaP}.

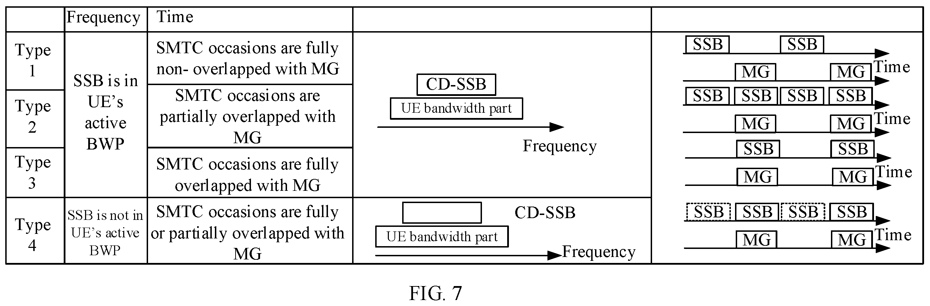

For RRM measurements on frequency points with equal or low priority, different RRM measurement relaxation methods are defined for different RRM measurement relaxation criteria, as illustrated in FIG. 7. Specifically:
- When the terminal device meets the "low mobility" criterion, the terminal device uses a longer measurement interval when performing RRM measurements on neighbor cells. A fixed scaling factor is used to increase the measurement interval.
- When the terminal device meets the criterion of "the terminal device is not located at the edge of the cell", the terminal device uses a longer measurement interval when performing RRM measurements on neighbor cells. A fixed scaling factor is used to increase the measurement interval.
- When the terminal device simultaneously meets the criteria of "low mobility" and "terminal device not located at the cell edge", the measurement intervals for the terminal device for co-frequency points, different frequency points, and different access network frequency points are all increased to 1 hour.

### 4. RRM measurement requirements for UE in RRC connected state

Including both intra-frequency measurement and inter-frequency measurement, wherein the measurement without measurement gap (MG) primarily considers the SMTC period; whereas the measurement with MG requires consideration of both the SMTC and measurement gap repetition period (MGRP) periods.

For L3 RRM measurements, the current related art determines whether MG is required for measurements based on the following rules:
- Intra-frequency SSB: when the UE indicates 'no-gap' through *intraFreq-needForGap*, or when the SSB is within the UE's current active Bandwidth Part (BWP), or when the current DL BWP is the initial DL BWP, the UE is capable of performing intra-frequency SSB measurements outside the MG. Further, based on the relationship between SMTC and MG, it can be determined whether the actual measurement is within the MG.
   ▪ For intra-frequency SSB and MO (measurement object) does not need MG,
      ◆ when the SMTC associated with it is non-overlapped with the MG occasion, outside MG is adopted;
      ◆ when the SMTC associated with it is partially overlapped with the MG occasion, outside MG is adopted;
      ◆ when the SMTC associated with it is completely overlapped with the MG occasion, within MG is adopted;
   ▪ For intra-frequency SSB and MO needs MG, only within MG can be adopted (without considering the relationship between SMTC and MG);
- Inter-frequency SSB: When the UE supports the *interFrequencyMeas-Nogap-r16* capability, and the network indicates interFrequencyConfig-NoGap-r16, and the inter-frequency SSB is within the active BWP, the UE is capable of performing inter-frequency measurement of the SSB at that frequency point outside the MG. Further, based on the relationship between SMTC and MG, it can be determined whether the actual measurement needs to be completed within the MG.
   ▪ For inter-frequency SSB and MO does not need MG,
      ◆ when the SMTC associated with it are non-overlapped with the MG occasion, and the aforementioned *interFrequencyMeas-NoGap-r16* and *interFrequencyConfig-NoGap-r16* conditions are met, outside MG is adopted;
      ◆ when the SMTC associated with it are partially overlapped with the MG occasion, for UEs supporting CA capability, and when the aforementioned *interFrequencyMeas-NoGap-r16* and *interFrequencyConfig-NoGap-r16* conditions are met, outside MG is adopted;
      ◆ when the SMTC associated with it are completely overlapped with the MG occasion, within MG is adopted;
      ◆ when the SMTC associated with it is partially overlapped with the MG occasion, for UEs that do not support CA capability, within MG is adopted;
   ▪ For inter-frequency SSB and MO does not need MG, only within MG can be adopted.

### 5. Connected state RLM/BFD/BM measurement: BWP without restriction

### Introduction (Introduction)

Bandwidth Part (BWP) operation without Restriction (FG 6-1a as referred in TR 38.822) is an optional feature introduced in Rel-15 for non-Redcap UEs, for the support of BWP operation without a Cell-Defining Synchronization Signal Block (CD-SSB). Due to unclear UE behavior on how to perform Beam Management (BM), Radio Link Monitoring (RLM) and Beam Failure Detection (BFD) operations, in the case where the UE was operating in a BWP that would not include the bandwidth (BW) of the SSB, four options are specified to complete the support of this feature:
- Option A) Perform BM/RLM/BFD based on CSI-RS within active BWP
- Option B-1-1) Perform BM/RLM/BFD based on SSB outside active BWP without interruptions
- Option B-1-2) Perform BM/RLM/BFD based on SSB outside active BWP with interruptions
- Option C) Perform BM/RLM/BFD based on NCD-SSB within active BWP for non-RedCap UEs

Additionally, for Option B-1-1 and C, it was specified requirements for L3 intra-frequency measurements without gaps. Moreover, for Option C, handover requirements based on existing RedCap handover requirements were specified.

### Description

### Option A

RAN4 has agreed that existing legacy RRM requirements are applicable for UEs supporting Option A. No specification changes were made for this option apart from capability signalling aspects.

### Option B-1-1

The SSB-based requirements for BM/RLM/BFD measurements, L3 intra-frequency measurements without measurement gaps, and timing, were updated to capture their applicability for UEs supporting Option B-1-1 if CD-SSB is within the channel bandwidth of the UE. Capability signaling aspects have been specified to convey the support of this option.

### Option B-1-2

RAN4 decided not to define the requirements for option B-1-2 due to lack of consensus on how to define the requirement. No specification changes were made for this option apart from capability signaling aspects.

### Option C

The SSB-based requirements for BM/RLM/BFD measurements, L3 intra-frequency measurements without measurement gaps, and timing, were updated to capture their applicability to NCD-SSB for UEs supporting Option C.

Requirements for the transition between CD-SSB and NCD-SSB for BM/RLM/BFD measurements and L3 measurements were introduced for UEs supporting Option C based on the existing requirements from RedCap.

Handover requirements based on the existing requirements from RedCap were introduced for non-RedCap for the following scenarios:
- Intra-frequency handover from NCD-SSB to NCD-SSB
- Inter-frequency handover from NCD-SSB to CD-SSB
- Inter-frequency handover from CD-SSB to NCD-SSB
- Inter frequency handover from NCD-SSB to NCD-SSB

Existing RRC configuration signaling for NCD-SSB was reused and the capability signaling aspects were specified to convey support for this option.

The energy-saving signal introduced in related arts is primarily aimed at reducing the power consumption for PDCCH detection, while the power consumption for RRM measurements is saved through the RRM measurement relaxation mechanism. The WUS introduced in related arts is to further reduce the power consumption caused by the UE's main receiver being turned on for PDCCH detection. In addition to detecting PDCCH, the UE's main receiver also needs to be periodically turned on for RRM measurements. The RRM measurement relaxation mechanism can increase the time interval for RRM measurements of neighbor cells. However, the determination conditions for performing RRM measurements are based on the measurement results of the serving cell, and the RRM measurements of the serving cell are not relaxed. WUS receives the wake-up signal by turning on the WUR receiver, which then triggers the turn-on of the main receiver. If the main receiver needs to be continuously turned on for RRM measurements, the power-saving effect brought by the introduced WUS signal will be greatly reduced, and the power-saving gain cannot be reflected.

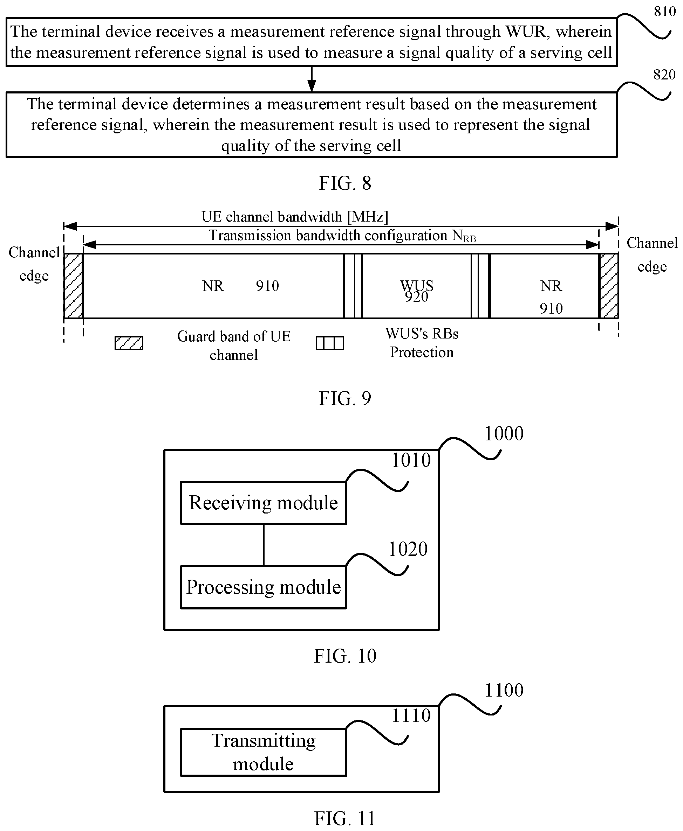

Please refer to FIG. 8, which illustrates the flowchart of the measurement method according to some embodiments of the present disclosure. This method is performed by a terminal device. The method includes at least one of the following processes 810 to 820.

In process 810, the terminal device receives a measurement reference signal through WUR, wherein the measurement reference signal is used to measure a signal quality of a serving cell.

Correspondingly, the network device transmits a measurement reference signal to the terminal device.

In related arts, the signal quality of the serving cell is typically performed by measuring reference signals. For instance, in LTE systems, the network device continuously transmits a cell-specific reference signal (CRS), and the terminal device can measure the CRS to determine the cell quality of the serving cell and/or neighbor cells. As an example, in 5G NR systems, SSB is introduced to measure the cell signal quality.

In some embodiments, terminal devices can perform measurements such as RLM measurement, RRM measurement, and BFD measurement on the measurement reference signal. For example, CRS is used by default for the RLM measurements in LTE systems, while CSI-RS is used by default for the RLM measurements in NR systems. To support mobility (cell handover, cell reselection, etc.), the network device configures CSI-RS resources for the current serving cell and one or more neighbor cells to the terminal device for the RRM measurements, which is also a supplement to SSB-based measurements. Similarly to RLM, CSI-RS is used to detect whether the transmit beam and receive beam are misaligned. If misaligned, the signal quality is significant decreased. The difference from RLM is that BFD does not trigger the RRC connection reestablishment process, but instead uses the beam management process to realign the transmit beam and receive beam.

Generally, RLM measurements are only conducted on the serving cell, and SPCell includes PCell in SA NR, NR-DC and NE-DC operation mode, PSCell in NR-DC and EN-DC operation modes, as well as Deactivated PSCell in NR-DC and EN-DC operation modes, when configured.

BFD measurement is only conducted on the serving cell: including PCell in SA, NR-DC, or NE-DC operation mode, PSCell in NR-DC and EN-DC operation mode, SCell in SA, NR-DC, NE-DC or EN-DC operation mode, and Deactivated PSCell in NR-DC and EN-DC operation mode.

In related arts, the main receiver of the terminal device not only detects PDCCH but also periodically turns on for RRM measurements. The relaxation mechanism for RRM measurements can increase the time interval for conducting RRM measurements on neighbor cells. However, the determination condition for transmitting RRM measurements are based on the measurement results of the serving cell, and the RRM measurements of the serving cell are not relaxed. WUS receives the wake-up signal by turning on the WUR receiver, which then triggers the turn-on of the main receiver. If the main receiver needs to be turned on periodically for RRM measurements, the power-saving effect brought by the introduced WUS signal will be greatly reduced, and the power-saving gain cannot be reflected. Therefore, WUR can be utilized to share all or part of the measurements of the serving cell for the main receiver, reducing the number of times the main receiver needs to wake up for measurements as much as possible, or reducing the interruptions required when the main receiver is receiving data.

In some embodiments, the terminal device receives the measurement reference signal for measuring the signal quality of the serving cell through the WUR.

In some embodiments, the terminal device can also receive the measurement reference signal for measuring the signal quality of the neighbor cell through the WUR, which is not limited in this disclosure.

In some embodiments, the measurement reference signal can be any one or more reference signals used for measuring the signal quality of the cell. In some implementations, the measurement reference signal can also be other signals exchanged between the cell and the terminal device, which is not limited by the present disclosure. For example, the measurement reference signal can be a signal periodically exchanged between the cell and the terminal device.

In some embodiments, the measurement reference signal includes at least one of: SSB, CSI-RS, WUS.

In some embodiments, SSB is a combination of synchronization signal and PBCH block. It consists of three parts: primary synchronization signal (PSS), secondary synchronization signal (SSS), and PBCH.

The full name of CSI-RS is Channel State Information-Reference Signal, which is quite straightforward. This reference signal is used to acquire channel state information. Unlike CRS, CSI-RS is only effective within the bandwidth allocated to the mobile phone, and does not have to be continuously transmitted across the entire bandwidth. Therefore, even if 8-port transmission is supported, it will not cause a significant increase in system overhead. The network will notify the mobile phone of CSI-RS-related information over signaling. If there is no notification, the mobile phone will assume that CSI-RS does not exist.

WUS is the abbreviation of Wake-Up Signal. This "Signal" is a special PDCCH scrambled by Radio Network Temporary Identifier (RNTI), this "Signal" is transmitted by the network device before the DRX on duration to indicate whether the terminal device should wake up during the next DRX on duration. We know that in Connected mode DRX (CDRX), the terminal device wakes up periodically to listen for scheduling. Based on CDRX, WUS adds this Wake Up Signal to indicate whether the terminal device should wake up in the next period to listen for scheduling. Let's take a simple example: if there is only CDRX, the terminal device wakes up periodically, such as getting up at 8 am every day without exception; if there is CDRX+WUS, the terminal device can avoid waking up every period. For example, if it receives a text message at night saying that it can sleep in tomorrow, it can avoid waking up at 8 am the next day. This "text message" is the WUS.

In process 820, the terminal device determines a measurement result based on the measurement reference signal, wherein the measurement result is used to represent the signal quality of the serving cell.

In some embodiments, the measurement result is determined based on the measurement reference signal through the WUR.

In some embodiments, the measurement results can be RSRP, RSRQ, or other parameters capable of representing the signal quality of the serving cell, which is not limited in this disclosure. Illustratively, the measurement result can also be Signal to Interference plus Noise Ratio (SINR), RSSI (Received Signal Strength Indication), etc.

In some embodiments, the measurement processes performed in processes 810 and 820 can be those required during the selection or reselection of serving cell, or they can be utilized in other processes where measurement for the signal quality of the cell is necessary. For instance, they can be employed to maintain the mobility of the terminal device and ensure stable signal quality during the movement of the terminal device. Additionally, they can be used in the initial access process of the terminal device.

The technical solution according to the embodiments of the present disclosure receives the measurement reference signal through the WUR, eliminating the need to wake up the main receiver or interrupt its data reception and measurement every time the signal quality of the serving cell is measured. This reduces the impact on the main receiver's data reception or measurement, while also reducing power consumption of the terminal device.

Due to the different states of the main receiver in the terminal device when the terminal is in RRC connected state, RRC idle state, and RRC inactive state, such as the main receiver being in a sleep state in the case of the RRC idle state and RRC inactive state, if the main receiver is to perform signal quality measurement for the serving cell, it is necessary for the WUR to wake up the main receiver after receiving the WUS, and then the main receiver performs the measurement. In the RRC connected state, the main receiver is not in the sleep state, so there is no need for the WUR to wake up the main receiver. However, at this time, the main receiver may be receiving data. If the main receiver is required to perform measurements, it is necessary for the terminal main receiver to receive data or preset a measurement gap. Therefore, the embodiments of the present disclosure design a method for offloading the measurement "pressure" of the main receiver through the WUR when the terminal device is in the RRC connected state, RRC idle state, or RRC inactive state.

When the terminal device in the idle state needs to initiate a service (voice or data service), it first needs to initiate an RRC establishment request, triggering the state transition process from the idle state to the connected state. This process is the RRC establishment process. If a user in the connected state does not transmit data for a period of time, the user will enter the inactive state. When the user in the inactive state needs to initiate data transmission, the user will migrate to the connected state through the RRC recovery process. If the user in the inactive state still does not transmit data for a period of time, the user will enter the idle state.

### 1. The terminal device is in the RRC idle state, or the terminal device is in the RRC inactive state

In this case, there are two possible situations. One is that part or all of the measurement reference signal that the MR is originally supposed to receive is diverted to the WUR for reception. Another one is that after the MR is turned off, the MR no longer receives the measurement reference signal, and one or several signals that the WUR can receive are determined as the measurement reference signal to complete the measurement of the serving cell.

In some embodiments, in the case where the terminal device is in the RRC idle state or the inactive state, the method further includes the following process 830.

In process 830, the terminal device receives first configuration information transmitted by the network device, wherein the first configuration information is used to instruct the terminal device to receive the measurement reference signal through the WUR.

Correspondingly, the network device transmits the first configuration information to the terminal device.

In some embodiments, the first configuration information is RRC dedicated signaling; alternatively, the first configuration information is System Information Block (SIB) configuration information.

RRC is the control signaling in wireless networks, used to control the allocation and management of wireless resources. When the size of an RRC message exceeds the capacity of the physical layer, split bearer is needed for transmission. Using the split bearer, the large RRC message can be divided into a plurality of smaller segments, which are then transmitted through different bearers.

There are many types of SIBs, specifically including SIB1 and SIB2~13. The early SIB1 was also referred to as SU-1 (Scheduling Unit-1), while other SIBs are referred to as SU-n. Different SIBs carry different parameters and serve different purposes. For example, SIB1 mainly carries information related to cell access and cell selection, as well as LTE-Time-Division Duplex (TDD) subframe configuration, and scheduling and window information for other SIBs. Among all SIBs, the SIB1 is the most important, because the SIB1 not only carries the parameters required for terminal devices to access the cell, but also carries scheduling information for other types of SIBs. If the terminal device cannot decode the SIB1, the terminal device cannot decode other types of SIBs.

In some embodiments, the first configuration information is used to explicitly indicate how the terminal device receives the measurement reference signal through the WUR. For example, the first configuration information can be used to indicate whether the terminal device receives all or part of the measurement reference signal through the WUR.

In some embodiments, the first configuration information is used to indicate that the WUR is used to receive all of the measurement reference signal when the MR (main receiver) is turned off. Illustratively, the first configuration information is used to indicate that when the MR is turned off (or referred to as MR sleeps), the WUR does not need to wake up the MR, but can receive all of the measurement reference signal, reducing the power consumption caused by frequently waking up the MR.

In some embodiments, the first configuration information is used to indicate that, in the case where MR is turned off, the WUR is used to receive part of the measurement reference signal. In some embodiments, the first configuration information is used to indicate that, in the case of a turn-off case, the WUR is used to receive part of the measurement reference signal.

In some embodiments, in the case where the first configuration information is used to indicate that the WUR is used to receive part of the measurement reference signal in the case of MR being turned off, the first configuration information is also used to indicate the measurement reference signal that the WUR is used to receive. Illustratively, the first configuration information can be used to indicate the time-frequency resources where the measurement reference signal that the WUR needs to receive is located. In some embodiments, the first configuration information is used to indicate that the WUR is used to receive the measurement reference signal on the first carrier, wherein the first carrier includes at least one of: the carrier where the serving cell is selected, the EMR carrier. In some embodiments, the terminal device can acquire the EMR configuration in an RRC release message or SIB.

In some embodiments, the WUR may perform a measurement process for the signal quality of the serving cell only within a certain period of time. In some embodiments, the time required for the WUR to perform the measurement process is configured by the network device. In some embodiments, the WUR starts performing the measurement process upon receiving the first configuration information. In some embodiments, the end time for the WUR to perform the measurement process is maintained by a timer, wherein the timer is configured by the network device. In some embodiments, the timer is independent of the main receiver. In some embodiments, the timer can also be preconfigured or predefined. In some embodiments, the timer is a newly defined timer, or an existing timer can be reused. Illustratively, the timer can be T331. Illustratively, the duration of the timer can be configured by the first configuration information.

In some embodiments, the WUS can be used as or a replacement for the existing measurement reference signal for the serving cell in the RRC idle or inactive states. The terminal device receives the WUS through the WUR to complete measurements of the serving cell, while MR is turned off and no longer measures. Other signals that can be received by the WUR can also be used as measurement reference signals to achieve the above functions, which is not limited by the present disclosure.

In some embodiments, the measurement reference signal is a wake-up signal (WUS); the aforementioned process 810 can be implemented as process 811 as follows.

In process 811, the terminal device receives the WUS through the WUR, wherein the WUS is a periodically transmitted signal with a synchronization function.

In some embodiments, the method further includes the following process 840.

In process 840, the terminal device receives second configuration information transmitted by the network device, wherein the second configuration information is used to configure at least one of: the determination threshold for cell selection corresponding to the WUS, the S criterion corresponding to the WUS, the signal-to-noise ratio (SNR) condition corresponding to the WUS.

In some embodiments, the second configuration information is further used to indicate that the measurement reference signal is the WUS.

In some embodiments, due to the differences in transmission parameters between WUS and SSB or CSI-RS, the measurement result acquired by the terminal device after measuring the WUS may be different. The determination threshold, S criteria, SNR (signal-to-noise ratio) condition, or the like of cell selection set for SSB or CSI-RS is not applicable to the WUS. Therefore, relevant threshold values and/or condition parameters need to be reset for the WUS.

In some embodiments, the DRX corresponding to the WUR is different from the DRX corresponding to the MR.

In wireless networks, when there is data to be transmitted, the terminal device must continuously monitor the PDCCH and transmit and receive data based on the indication messages transmitted by the network device. This results in high power consumption and significant data transmission delay for the terminal device. Therefore, the DRX energy-saving strategy is introduced in related arts. According to the working state of DRX, it is categorized into an idle state (Idle-DRX) and a connected state (Connected-DRX).

In the Idle-DRX mode, the terminal device has no wireless resource connection and mainly completes the monitoring of the paging channel and broadcast channel. To achieve discontinuous reception, it only needs to configure a fixed sleep cycle. The DRX cycle in the idle mode is categorized into an active period and a sleep period. In the Connected-DRX mode, the UE has three states: being in an active period, being in a short DRX cycle (light sleep period), and being in a long DRX cycle (deep sleep period). During the active period, the terminal device can turn on the receiver to detect the PDCCH. During the sleep period, the transceiver unit is turned off and the PDCCH is not monitored. The light sleep period and the deep sleep period are distinguished based on different sleep cycles.

Therefore, the DRX of the WUR and the DRX of the main receiver can be different to achieve broader coverage of PDCCH.

In some embodiments, the DRX cycle corresponding to the WUR is different from the DRX cycle corresponding to the MR. Illustratively, the DRX cycle corresponding to the WUR is longer than the DRX cycle corresponding to the MR.

In some embodiments, the length of DRX corresponding to the WUR is different from the length of DRX corresponding to the MR. Illustratively, the length of DRX corresponding to the WUR is greater than the length of DRX corresponding to the MR. Since the WUR is more power-efficient, the WUR can be used to monitor the PDCCH for a longer period of time.

In some embodiments, the WUR is also used to receive at least one of: paging, SIB. In some embodiments, if the WUR conflicts with measurements for the serving cell during the processing of the above services, the method used by the main receiver to handle conflicts can be adopted, such as adding an interrupt during the processing of the above services to receive the measurement reference signal.

Through the aforementioned method, even when the terminal device is in the RRC idle state or RRC inactive state, the terminal device can still utilize the WUR to offload the measurement reference signal that the MR needs to receive. This eliminates the need to wake up the main receiver every time the signal quality of the serving cell is measured, thereby reducing the power consumption of the terminal device.

### 2. The terminal device is in the RRC connected state

In some embodiments, when the terminal device is in the RRC connected state, the main receiver is in an operational state and can receive the measurement reference signal to achieve measurement on the serving cell. However, when receiving the measurement reference signal, the main receiver may need to receive data or perform other measurement processes. In this case, it is necessary to set an interrupt during the main receiver's data reception process, or set a measurement gap for the main receiver. Therefore, the WUR can be used to receive the measurement reference signal, performing offloading, and reducing the processing pressure on the main receiver.

In some embodiments, the WUR and the main receiver may categorize the measurement processes to be performed into two types, wherein the WUR performs the first type of measurement process, and the main receiver performs the second type of measurement process.

In some embodiments, the terminal device is in the RRC connected state, with the WUR used to perform the first type of measurement process and the main receiver (MR) used to perform the second type of measurement process.

In some embodiments, the first type of measurement process and the second type of measurement process can be categorized based on the measurement object. For example, the measurement process for the primary cell can be categorized as the second type of measurement process, while the measurement process for the primary secondary cell can be categorized as the first type of measurement process.

In some embodiments, the first type of measurement process and the second type of measurement process can be categorized based on the priority of the cell to be measured. For example, the measurement process for the cell with high priority is categorized as the second type of measurement process, while the measurement process for the cell with low priority is categorized as the first type of measurement process.

In some embodiments, the first type of measurement process and the second type of measurement process can be categorized based on the signal quality requirement of the cell to be measured. For instance, the measurement process for the cell with higher signal quality requirement is categorized as the second type of measurement process, while the measurement process for the cell with lower signal quality requirement is categorized as the first type of measurement process.

In some embodiments, the first type of measurement process and the second type of measurement process can be categorized based on the antenna panel where the cell to be measured is located. For example, for FR2, the antenna panel and radio frequency link in FR2 are currently tied together. Due to the physical structure of the FR2 antenna panel, it is not possible to allocate independent link resources to the WUR for measurements of the primary cell and/or the primary secondary cell of FR2.

In some embodiments, the first type of measurement process includes at least one of: a measurement process for the primary secondary cell in NR in the E-UTRA NR dual-connectivity (EN-DC) mode;
a measurement process for the primary secondary cell in LTE in the NR and E-UTRA dual connectivity (NE-DC) mode;
a measurement process for the primary cell and/or the primary secondary cell of FR1 in the NR and NR dual connectivity (NR-DC) mode;
a measurement process for the primary cell and/or the primary secondary cell of FR1 in the NR CA (NR carrier aggregation) mode;
BFD measurement for the secondary cell.

In some embodiments, the second type of measurement process includes at least one of: a measurement process for the primary secondary cell in LTE in EN-DC mode;
a measurement process for the primary secondary cell in NR in the NE-DC mode;
a measurement process for the primary cell and/or the primary secondary cell of FR2 in the NR-DC mode;
a measurement process for the primary cell and/or the primary secondary cell of FR2 in the NR CA mode;
BFD measurement for the primary cell and/or the primary secondary cell.

Illustratively, in EN-DC, 4G serves as the primary node and 5G as the secondary node. Therefore, the measurement process for the primary secondary cell in LTE can be categorized as the second type of measurement process. In NE-DC, 5G serves as the primary node and 4G as the secondary node. Hence, the measurement process for the primary secondary cell in NR can be categorized as the second type of measurement process.

Illustratively, for FR2, the antenna panel and radio frequency link in FR2 are currently tied together. Due to the physical structure of the FR2 antenna panel, it is not possible to allocate independent link resources to the WUR for measurements of the primary cell and/or the primary secondary cell of FR2. If there are subsequent changes to FR2, it may also be considered to use the WUR for the measurement process of the primary cell and/or the primary secondary cell of FR2.

In some embodiments, BFD is different from RLM, the BFD measurement may be configured to be performed on Scell in addition to Pcell and PScel. For example, BFD measurement for the secondary cell can be preferentially offloaded to the WUR for measurement, while the more important primary cell and/or the primary secondary cell can be offloaded later.

In some embodiments, the first type of measurement process and the second type of measurement process can be categorized based on the measurement reference signal. Illustratively, the first type of measurement process and the second type of measurement process can be categorized based on whether the measurement reference signal to be measured is SSB or CSI-RS.

In some embodiments, the measurement reference signal corresponding to the first type of measurement process is SSB, and the measurement reference signal corresponding to the second type of measurement process is CSI-RS.

In some embodiments, the measurement reference signal corresponding to the first type of measurement process is CSI-RS, and the measurement reference signal corresponding to the second type of measurement process is SSB.

In some embodiments, when it comes to the measurement of BLE and the determination of measurement time in RLM, SSB or CSI-RS is used as part of the RLM-RS. By offloading based on the measurement reference signal, the advantage is power saving, while the disadvantage is that it may prolong the RLM time.

In some embodiments, the first type of measurement process and the second type of measurement process can be categorized based on the measurement scenario. In some other embodiments, the first type of measurement process and the second type of measurement process can be categorized based on whether the measurement interval or the interruption is caused. For instance, the process that results in the measurement interval is categorized as the first type of measurement process, while the process that does not cause the measurement interval is categorized as the second type of measurement process.

In related arts, the RLM and BFD measurements of the serving cell are all conducted outside the gap, i.e., a certain configuration needs to be satisfied or the UE needs to have a certain capability. In some embodiments, the aforementioned process 810 can be implemented as the following process 812.

In process 812, in the case where the first condition is met, the terminal device receives the measurement reference signal through the WUR.

In some embodiments, the first condition includes at least one of the following:
CD-SSB is within the BWP;
the terminal device supports the measurement process based on NCD-SSB, and NCD-SSB is within the BWP;
the terminal device supports the measurement process based on CSI-RS, and the CSI-RS is within the BWP;
the terminal device supports the measurement process that does not require interruption and based on CD-SSB and/or CSI-RS that are outside the BWP;
the terminal device supports the measurement process that requires interruption and based on CD-SSB and/or CSI-RS that are outside the BWP;
the terminal device supports the measurement process where the reference signal is outside the BWP and requires a measurement gap;
wherein BWP is the active BWP on the serving cell.

The aforementioned first condition can be broken down into three parts. The first is whether the terminal device supports the capability to perform the measurement process based on the measurement reference signal. The second is whether the measurement reference signal is within the BWP. The last is whether the measurement process will interrupt the MR, or whether the MR requires a gap to handle the measurement process.

If the terminal device supports the capability to perform measurement processes based on the measurement reference signal, and the measurement reference signal is within the BWP, then the WUR can be used for the measurement process, or the MR can be used for the measurement process. If the terminal device supports the capability to perform measurement processes based on the measurement reference signal, and the measurement reference signal is outside the BWP, then categorization can be performed based on whether an interruption will occur or whether a gap is required. If the interruption will occur or the gap is required, then the WUR can be used for the measurement process; if no interruption will occur or no gap is required, then MR can be used for the measurement process.

Based on the various situations mentioned above, the MR and the WUR can determine which measurements to conduct in the MR or the WUR, based on the current network configuration for UE BWP, as well as the configuration of CD-SSB or NCD-SSB in the serving cell MO or dedicated BWP, and the UE's capability to support the various scenarios mentioned above.

For example, the first condition is that the terminal device supports the measurement process where the measurement reference signal is outside the BWP and a measurement gap is required. For the terminal device that supports the capability that the measuring reference signal is outside the BWP, and the RLM-RS (such as CD-SSB or NCD-SSB) of the serving cell does not meet the requirement of being within the active BWP, the terminal device uses the WUR to offload some or all of the RLM-RS measurements, especially those RLM-RS that require gaps to complete the measurements. The advantage is that there is no need for the MR to additionally adopt gaps to complete the serving cell measurements, and the measurements or data scheduling of the MR and the WUR can be overlapped in the time domain, without requiring periodic per-UE or per-FR gap interruptions. At this time, the activated measurement bandwidth of the WUR should at least encompass the RLM-RS to be measured, and it is potentially required that the operating bandwidth of the WUR is staggered from the operating bandwidth of the MR receiver in the frequency domain. Illustratively, the channel bandwidth of the terminal device is illustrated in FIG. 9, including bandwidth 910 for data transmission and bandwidth 920 for WUS transmission. The WUR operates on the bandwidth 920 for WUS transmission, while the MR operates on the bandwidth 910 for data transmission.

Through the aforementioned method, the WUR receives the measurement reference signal, eliminating the need to wake up the main receiver every time the signal quality of the serving cell is measured and interrupt the data reception and measurement of the main receiver. This reduces the impact on the data reception or measurement of the main receiver, while also reducing the power consumption of the terminal device.

In the method embodiments described above, the technical solution of the present disclosure is introduced and explained solely from the perspective of interaction between the terminal device and the network device. The processes performed by the terminal device mentioned above can be independently implemented as a measurement method on the terminal device, and the processes performed by the network device mentioned above can be independently implemented as a measurement method on the network device. Furthermore, the embodiments according to the present disclosure can be arbitrarily combined to form new embodiments, all of which fall within the scope of protection of the present disclosure.

The followings are apparatus embodiments of the present disclosure, which can be used to perform the method embodiments of the present disclosure. For details not disclosed in the apparatus embodiments of the present disclosure, please refer to the method embodiments of the present disclosure.

Please refer to FIG. 10, which illustrates a block diagram of a measurement apparatus according some embodiments of the present disclosure. The apparatus possesses the functions to perform the aforementioned measurement method embodiments, and the functions can be realized either through hardware or by executing corresponding software on hardware. The apparatus can be the terminal device introduced above, or it can be integrated into the terminal device. As illustrated in FIG. 10, the apparatus 1000 may include: a receiving module 1010 and a processing module 1020.

The receiving module 1010 is configured to receive a measurement reference signal through a WUR, wherein the measurement reference signal is used to measure a signal quality of a serving cell.

The processing module 1020 is configured to determine a measurement result based on the measurement reference signal, wherein the measurement result is used to represent the signal quality of the serving cell.

In some embodiments, in the case where the terminal device is in the radio resource control (RRC) idle state or inactive state, the receiving module 1010 is further configured to receive first configuration information transmitted by a network device, wherein the first configuration information is used to instruct the terminal device to receive the measurement reference signal through the WUR.

In some embodiments, the first configuration information is RRC dedicated signaling; alternatively, the first configuration information is SIB configuration information.

In some embodiments, the first configuration information is used to indicate that, in the case where the MR is turned off, the WUR is used to receive all of the measurement reference signal; or the first configuration information is used to indicate that the WUR is used to receive the measurement reference signal on a first carrier, wherein the first carrier includes at least one of: a carrier where the serving cell is selected, an EMR carrier.

In some embodiments, the end time of the measurement process performed by the WUR is maintained by a timer, wherein the timer is configured by the network device.

In some embodiments, the measurement reference signal is WUS; and the receiving module 1010 is configured to receive the WUS through the WUR, where the WUS is a periodically transmitted signal with a synchronization signal function.

In some embodiments, the receiving module 1010 is further configured to receive second configuration information transmitted by the network device, wherein the second configuration information is used to configure at least one of: a determination threshold for cell selection corresponding to the WUS, an S criterion corresponding to the WUS, a signal to noise ratio (SNR) condition corresponding to the WUS.

In some embodiments, the period of discontinuous reception (DRX) corresponding to the WUR is different from the period of DRX corresponding to the main receiver (MR); and/or the length of the DRX corresponding to the WUR is different from the length of the DRX corresponding to the MR.

In some embodiments, the WUR is further configured to receive at least one of: paging, SIB.

In some embodiments, the terminal device is in a radio resource control (RRC) connected state, the WUR is used to perform a first type of measurement process, and the main receiver (MR) is used to perform a second type of measurement process.

In some embodiments, the first type of measurement process includes at least one of: a measurement process for the primary secondary cell in the new radio (NR) in the evolved universal terrestrial radio access (E-UTRA)-NR dual connectivity (EN-DC) mode;
a measurement process for the primary secondary cell in long-term evolution (LTE) technology in the NR-E-UTRA dual connectivity (NE-DC) mode;
a measurement process for the primary cell and/or the primary secondary cell of frequency range FR1 in the NR-NR dual connectivity (NR-DC) mode;
a measurement process for the primary cell and/or the primary secondary cell of the FR1 in the NR carrier aggregation (CA) mode;
beam failure detection (BFD) measurement for the secondary cell.

In some embodiments, the second type of measurement process includes at least one of: a measurement process for the primary secondary cell in LTE in EN-DC mode;
a measurement process for the primary secondary cell in NR in the NE-DC mode;
a measurement process for the primary cell and/or the primary secondary cell of FR2 in the NR-DC mode;
a measurement process for the primary cell and/or the primary secondary cell of the FR2 in the NR CA mode;
BFD measurement for the primary cell and/or the primary secondary cell.

In some embodiments, the measurement reference signal corresponding to the first type of measurement process is the synchronizing signal and PBCH block (SSB), and the measurement reference signal corresponding to the second type of measurement process is the channel-state information reference signal (CSI-RS); or the measurement reference signal corresponding to the first type of measurement process is CSI-RS, and the measurement reference signal corresponding to the second type of measurement process is SSB.

In some embodiments, the terminal device is in a radio resource control (RRC) connected state; the receiving module 1010 is configured to receive the measurement reference signal through the WUR in the case where the first condition is met;
wherein the first condition includes at least one of the following:
the cell defining (CD)-SSB is within the (bandwidth part) BWP;
the terminal device supports the measurement process based on the non-cell-defining (NCD)-SSB, wherein the NCD-SSB is within the BWP;
the terminal device supports the measurement process based on CSI-RS, wherein the CSI-RS is within the BWP;
the terminal device supports the measurement process that does not require interruption and based on CD-SSB and/or CSI-RS that are outside the BWP;
the terminal device supports the measurement process that requires interruption and based on CD-SSB and/or CSI-RS that are outside the BWP;
the terminal device supports the measurement process where the measurement reference signal is outside the BWP and requires a measurement gap;
wherein the BWP is the active BWP on the serving cell.

In some embodiments, the measurement reference signal includes at least one of: SSB, CSI-RS, WUS.

The technical solution according to the embodiments of the present disclosure receives the measurement reference signal through the WUR, eliminating the need to wake up the main receiver or interrupt its data reception and measurement every time the signal quality of the serving cell is measured. This reduces the impact on the main receiver's data reception or measurement, while also reducing power consumption of the terminal device.

Please refer to FIG. 11, which illustrates a block diagram of a measurement apparatus according to some embodiments of the present disclosure. The apparatus possesses the functions to perform the aforementioned measurement method embodiments, and the functions can be realized either through hardware or by executing corresponding software on hardware. The apparatus can be the network device introduced above, or it can be integrated into the network device. As illustrated in FIG. 11, the apparatus 1100 may include: a transmitting module 1110.

The transmitting module 1110 is configured to transmit a measurement reference signal to a terminal device. The measurement reference signal is used to measure a signal quality of a serving cell, and the measurement reference signal is received by the terminal device using a wake-up receiver (WUR).

In some embodiments, in the case where the terminal device is in the radio resource control (RRC) idle state or inactive state, the transmitting module 1110 is further configured to transmit first configuration information to the terminal device, wherein the first configuration information is used to instruct the terminal device to receive the measurement reference signal through the WUR.

In some embodiments, the first configuration information is RRC dedicated signaling; alternatively, the first configuration information is system information block (SIB) configuration information.

In some embodiments, the first configuration information is used to indicate that the WUR is used to receive all of the measurement reference signal in the case where the main receiver (MR) is turned off; or the first configuration information is used to indicate that the WUR is used to receive the measurement reference signal on the first carrier, wherein the first carrier includes at least one of: the carrier where the serving cell is selected, an early measurement report (EMR) carrier.

In some embodiments, the end time of the measurement process performed by the WUR is maintained by a timer, wherein the timer is configured by the network device.

In some embodiments, the measurement reference signal is a wake-up signal (WUS); and the transmitting module 1110 is configured to transmit the WUS to the terminal device, where the WUS is a periodically transmitted signal with a synchronization function.

In some embodiments, the transmitting module 1110 is further configured to transmit second configuration information to the terminal device, wherein the second configuration information is used to configure at least one of: a determination threshold for cell selection corresponding to the WUS, an S criterion corresponding to the WUS, a signal to noise ratio (SNR) condition corresponding to the WUS.

In some embodiments, the period of discontinuous reception (DRX) corresponding to the WUR is different from the period of DRX corresponding to the main receiver (MR); and/or, the length of the DRX corresponding to the WUR is different from the length of the DRX corresponding to the MR.

In some embodiments, the WUR is further configured to receive at least one of: paging, SIB.

In some embodiments, the terminal device is in a radio resource control (RRC) connected state, the WUR is used to perform a first type of measurement process, and the main receiver (MR) is used to perform a second type of measurement process.

In some embodiments, the first type of measurement process includes at least one of: a measurement process for the primary secondary cell in the new radio (NR) in the evolved universal terrestrial radio access (E-UTRA)-NR dual connectivity (EN-DC) mode;
a measurement process for the primary secondary cell in long-term evolution (LTE) technology in the NR-E-UTRA dual connectivity (NE-DC) mode;
a measurement process for the primary cell and/or the primary secondary cell in the frequency range FR1 in the NR-NR dual connectivity (NR-DC) mode;
a measurement process for the primary cell and/or the primary secondary cell of the FR1 in the NR carrier aggregation (CA) mode;
beam failure detection (BFD) measurement for the secondary cell.

In some embodiments, the second type of measurement process includes at least one of: a measurement process for the primary secondary cell in LTE in EN-DC mode;
a measurement process for the primary secondary cell in NR in the NE-DC mode;
a measurement process for the primary cell and/or the primary secondary cell of FR2 in the NR-DC mode;
a measurement process for the primary cell and/or the primary secondary cell of the FR2 in the NR CA mode;
BFD measurement for the primary cell and/or the primary secondary cell.

In some embodiments, the measurement reference signal corresponding to the first type of measurement process is the synchronization signal and PBCH Block (SSB), and the measurement reference signal corresponding to the second type of measurement process is the channel-state information reference signal (CSI-RS); or the measurement reference signal corresponding to the first type of measurement process is the channel-state information reference signal (CSI-RS), and the measurement reference signal corresponding to the second type of measurement process is the synchronizing signal and PBCH block (SSB).

In some embodiments, the terminal device is in a radio resource control (RRC) connected state; in the case where the first condition is met, the terminal device receives the measurement reference signal through the WUR;
wherein the first condition includes at least one of the following:
CD-SSB is within the BWP;
the terminal device supports the measurement process based on NCD-SSB, and the NCD-SSB is within the BWP;
the terminal device supports the measurement process based on CSI-RS, and the CSI-RS is within the BWP;
the terminal device supports the measurement process that does not require interruption and based on CD-SSB and/or CSI-RS that are outside the BWP;
the terminal device supports the measurement process that requires interruption and based on CD-SSB and/or CSI-RS that are outside the BWP;
the terminal device supports the measurement process where the reference signal is outside the BWP and requires a measurement gap;
wherein the BWP is the active BWP on the serving cell.

In some embodiments, the measurement reference signal includes at least one of: SSB, CSI-RS, WUS.

The technical solution according to the embodiments of the present disclosure involves the terminal device receiving the measurement reference signal through the WUR, eliminating the need to wake up the main receiver or interrupt its data reception and measurement every time the signal quality of the serving cell is measured. This reduces the impact on the main receiver's data reception or measurement, while also reducing the power consumption of the terminal device.

It should be noted that in the above embodiments, the apparatus is exemplified only based on the division of various functional modules to illustrate its functions. In practice, the aforementioned functions can be allocated to different functional modules based on actual needs, that is, the content structure of the apparatus can be divided into different functional modules to fulfill all or part of the functions described above.

Regarding the apparatus in the aforementioned embodiments, the specific ways in which each module performs operations have been described in detail in the embodiments related to the method, and will not be elaborated here.

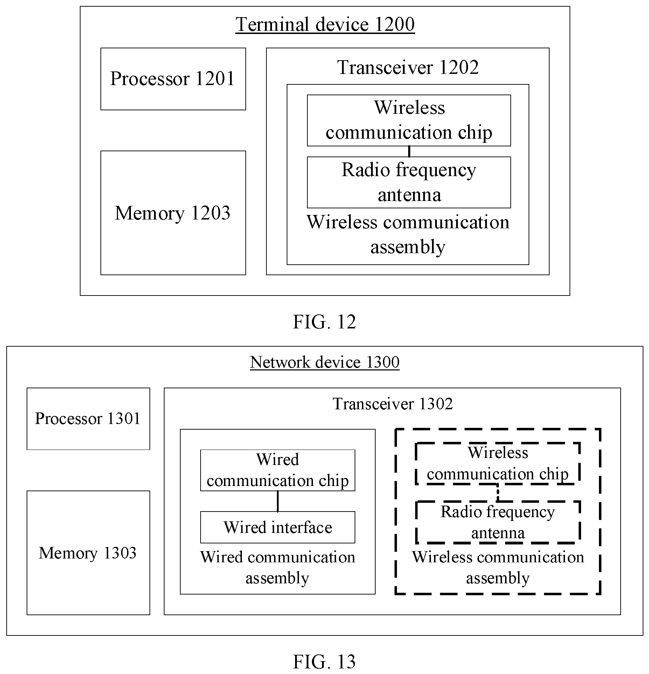

Please refer to FIG. 12, which illustrates the schematic structural diagram of a terminal device according to some embodiments of the present disclosure. The terminal device 1200 may include: a processor 1201, a transceiver 1202, and a memory 1203. The transceiver 1202 is used to implement transmitting or receiving functions, such as the function of the aforementioned receiving module 1010. The processor 1201 can be used to implement other processing functions or control transmitting and/or receiving, such as the function of the aforementioned processing module 1020.

The processor 1201 includes one or more processing cores, and executes various functional applications and information processing by running software programs and modules.

The transceiver 1202 can include a receiver and a transmitter, for example, which can be implemented as a single wireless communication assembly. This wireless communication assembly can include a wireless communication chip and a radio frequency antenna.

The memory 1203 can be connected to the processor 1201 and the transceiver 1202.

The memory 1203 can be used to store a computer program executed by the processor, and the processor 1201 is used to execute the computer program to perform the various processes in the aforementioned method embodiments.

In some embodiments, the transceiver 1202 is configured to receive a measurement reference signal through a WUR, wherein the measurement reference signal is used to measure a signal quality of a serving cell. The processor 1201 is configured to determine a measurement result based on the measurement reference signal, wherein the measurement result is used to represent the signal quality of the serving cell.

For details not elaborated in these embodiments, please refer to the previous embodiments, which are not elaborated herein any further.

In addition, the memory may be implemented by any type of volatile or non-volatile storage device, or a combination thereof. Volatile or non-volatile storage devices include, but are not limited to: magnetic or optical disks, an electrically erasable programmable read-only memory, an erasable programmable read-only memory, a static random access memory, a read-only memory, a magnetic memory, a flash memory, and a programmable read-only memory.

Please refer to FIG. 13, which illustrates the schematic structural diagram of a network device according to some embodiments of the present disclosure. The network device 1300 may include: a processor 1301, a transceiver 1302, and a memory 1303. The processor 1301 is used to implement the functions of the aforementioned processing module, and the transceiver 1302 is used to implement the functions of the aforementioned transmitting module 1110.

The processor 1301 includes one or more processing cores. By executing software programs and modules, the processor 1301 performs various functional applications and information processing. The processor 1301 is used to execute other processes performed by the network device in the aforementioned method embodiments, excluding the transmitting and receiving processes.

The transceiver 1302 can include a receiver and a transmitter, for example, which can be implemented as a single wireless communication assembly. This wireless communication assembly can include a wireless communication chip and a radio frequency antenna. The transceiver 1302 is used to perform the transmitting and/or receiving processes performed by the network device in the aforementioned method embodiments.

The memory 1303 can be connected to the processor 1301 and the transceiver 1302.

The memory 1303 can be used to store the computer program executed by the processor, and the processor 1301 is used to execute the computer program to perform each process in the above method embodiments.

Furthermore, the memory can be implemented by any type of volatile or non-volatile storage device, or a combination thereof. Volatile or non-volatile storage devices include, but are not limited to: magnetic or optical disks, an electrically erasable programmable read-only memory, an erasable programmable read-only memory, a static random access memory, a read-only memory, a magnetic memory, a flash memory, and a programmable read-only memory.

In some embodiments, the transceiver 1302 is used to transmit a measurement reference signal to a terminal device, wherein the measurement reference signal is used to measure a signal quality of the serving cell, and the measurement reference signal is received by the terminal device through the WUR.

For details not elaborated in these embodiments, please refer to the previous embodiments, which are not elaborated herein any further.

The embodiments of the present disclosure further provide a computer-readable storage medium, wherein a computer program is stored, which is configured to be executed by a processor to perform the measurement method on the terminal device as described above, or to perform the measurement method on the network device as described above. Optionally, the computer-readable storage medium may include: Read-Only Memory (ROM), Random-Access Memory (RAM), Solid State Drives (SSD), or optical discs, etc. The random access memory may include Resistance Random Access Memory (ReRAM) and Dynamic Random Access Memory (DRAM).

The embodiments of the present disclosure further provide a chip including a programmable logic circuit and/or program instructions, when the chip operates, the chip is used to perform the measurement method on the terminal device as described above, or to perform the measurement method on the network device as described above.

The embodiments of the present disclosure also provide a computer program product, which includes a computer program stored in a computer-readable storage medium. The processor reads and executes the computer program from the computer-readable storage medium to perform the measurement method on the terminal device described above, or to perform the measurement method on the network device described above.

It should be understood that the "indication" mentioned in the embodiments of the present disclosure can be direct indication, indirect indication, or even indicate an association relationship. For example, A indicating B can mean that A directly indicates B, such as B being acquired through A; it can also mean that A indirectly indicates B, such as A indicating C, and B being acquired through C; it can also mean that there is an association relationship between A and B.

In the descriptions of embodiments of the present disclosure, the term "correspond" indicates a direct or indirect corresponding relationship between two items, or indicates an associated relationship between two items; and also indicates relationships such as indicating and being indicated, or configuring and being configured.

In some embodiments of the present disclosure, "predefined" can be implemented by prestoring corresponding codes, tables, or other means that can be used to indicate relevant information in devices (e.g., including the terminal device and the AP). The specific implementation method is not limited in the present disclosure. For example, predefined can refer to what is defined in the protocol.

In some embodiments of the present disclosure, the term "protocol" may refer to a standard or a protocol in the communication field, including, for example, the LTE protocol, the NR protocol, and related protocols applied in the future communication systems, which is not limited in the present disclosure.

In this document, "a plurality" refers to two or more. "And/or" describes the association relationship between associated objects, indicating that there can be three types of relationships. For example, A and/or B can represent three situations: A exists alone, A and B exist simultaneously, and B exists alone. The character "/" generally indicates that the relationship between the preceding and following associated objects is an "or" relationship.

The term "greater than or equal to" mentioned in the present disclosure can mean greater than or equal to, or simply greater, while "less than or equal to" can mean less than or equal to, or simply less.

In addition, the process numbers described in the present disclosure only exemplarily illustrate a possible execution sequence in processes. In some other embodiments, the aforementioned processes may not be performed in numerical order. For instance, two processes with different numbers may be performed simultaneously, or two processes with different numbers may be performed in a sequence opposite to that illustrated in the diagram. The embodiments of the present disclosure do not impose any limitations on this.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A measurement method, performed by a terminal device, the method comprising:
receiving a measurement reference signal through a wake-up receiver (WUR), wherein the measurement reference signal is used to measure a signal quality of a serving cell; and
determining a measurement result based on the measurement reference signal, wherein the measurement result is used to represent the signal quality of the serving cell.

2. The method according to claim 1, wherein in a case where the terminal device is in a radio resource control (RRC) idle state or inactive state, the method further comprises:
receiving first configuration information transmitted by a network device, wherein the first configuration information is used to instruct the terminal device to receive the measurement reference signal through the WUR.

3. The method according to claim 2, wherein the first configuration information is RRC dedicated signaling; or the first configuration information is system information block (SIB) configuration information.

4. The method according to claim 2 or 3, wherein the first configuration information is used to indicate that the WUR is used to receive all of the measurement reference signal in a case where a main receiver (MR) is turned off; or
the first configuration information is used to indicate that the WUR is used to receive the measurement reference signal on a first carrier, wherein the first carrier comprises at least one of: a carrier where the serving cell is selected, an early measurement report (EMR) carrier.

5. The method according to any one of claims 2 to 4, wherein an end time of a measurement process performed by the WUR is maintained by a timer, wherein the timer is configured by the network device.

6. The method according to any one of claims 2 to 5, wherein the measurement reference signal is a wake-up signal (WUS); and receiving the measurement reference signal through the WUR comprises:
receiving the WUS through the WUR, wherein the WUS is a periodically transmitted signal with a synchronization signal function.

7. The method according to claim 6, further comprising:
receiving second configuration information transmitted by the network device, wherein the second configuration information is used to configure at least one of: a determination threshold for cell selection corresponding to the WUS, an S criterion corresponding to the WUS, a signal-to-noise ratio (SNR) condition corresponding to the WUS.

8. The method according to any one of claims 2 to 7, wherein a period of discontinuous reception (DRX) corresponding to the WUR is different from a period of DRX corresponding to the main receiver (MR); and/or,
a length of the DRX corresponding to the WUR is different from a length of the DRX corresponding to the MR.

9. The method according to any one of claims 2 to 8, wherein the WUR is further configured to receive at least one of: paging, system information block (SIB).

10. The method according to claim 1, wherein the terminal device is in a radio resource control (RRC) connected state, the WUR is used to perform a first type of measurement process, and a main receiver (MR) is used to perform a second type of measurement process.

11. The method according to claim 10, wherein the first type of measurement process comprises at least one of:
a measurement process for a primary secondary cell in new radio (NR) in an evolved universal terrestrial radio access (E-UTRA)-NR dual connectivity (EN-DC) mode;
a measurement process for a primary secondary cell in long-term evaluation (LTE) technology in an NR-E-UTRA dual connectivity (NE-DC) mode;
a measurement process for a primary cell and/or a primary secondary cell of a frequency range FR1 in an NR-NR dual connectivity (NR-DC) mode;
a measurement process for a primary cell and/or a primary secondary cell of the frequency range FR1 in an NR carrier aggregation (CA) mode;
beam failure detection (BFD) measurement for a secondary cell.

12. The method according to claim 10 or 11, wherein the second type of measurement process comprises at least one of:
a measurement process for a primary secondary cell in LTE in an EN-DC mode;
a measurement process for a primary secondary cell in NR in an NE-DC mode;
a measurement process for a primary cell and/or a primary secondary cell of FR2 in an NR-DC mode;
a measurement process for a primary cell and/or a primary secondary cell of the FR2 in an NR CA mode;
BFD measurement for a primary cell and/or a primary secondary cell.

13. The method according to any one of claims 10 to 12, wherein a measurement reference signal corresponding to the first type of measurement process is a synchronizing signal and PBCH block (SSB), and a measurement reference signal corresponding to the second type of measurement process is a channel-state information reference signal (CSI-RS); or
a measurement reference signal corresponding to the first type of measurement process is CSI-RS, and a measurement reference signal corresponding to the second type of measurement process is SSB.

14. The method according to claim 1, wherein the terminal device is in a radio resource control (RRC) connected state; receiving the measurement reference signal through the WUR comprises:
receiving the measurement reference signal through the WUR in a case where a first condition is met;
wherein the first condition comprises at least one of:
a cell defining (CD)-SSB is within a bandwidth part (BWP);
the terminal device supports a measurement process based on non-cell defining (NCD)-SSB, wherein the NCD-SSB is within a BWP;
the terminal device supports a measurement process based on CSI-RS, wherein the CSI-RS is within a BWP;
the terminal device supports a measurement process that does not require interruption and based on CD-SSB and/or CSI-RS that are outside a BWP;
the terminal device supports a measurement process that requires interruption and based on CD-SSB and/or CSI-RS that are outside a BWP;
the terminal device supports a measurement process that requires a measurement gap and the reference signal is outside a BWP;
wherein the BWP is an active BWP on the serving cell.

15. The method according to any one of claims 1 to 14, wherein the measurement reference signal comprises at least one of: SSB, CSI-RS, WUS.

16. A measurement method, performed by a network device, the method comprising:
transmitting a measurement reference signal to a terminal device, wherein the measurement reference signal is used to measure a signal quality of a serving cell, and the measurement reference signal is received by the terminal device using a wake-up receiver (WUR).

17. The method according to claim 16, wherein in a case where the terminal device is in a radio resource control (RRC) idle state or inactive state, the method further comprises:
transmitting first configuration information to the terminal device, wherein the first configuration information is used to instruct the terminal device to receive the measurement reference signal through the WUR.

18. The method according to claim 17, wherein the first configuration information is RRC dedicated signaling; or the first configuration information is system information block (SIB) configuration information.

19. The method according to claim 17 or 18, wherein the first configuration information is used to indicate that the WUR is used to receive all of the measurement reference signal in a case where a main receiver (MR) is turned off; or
the first configuration information is used to indicate that the WUR is used to receive the measurement reference signal on a first carrier, wherein the first carrier comprises at least one of: a carrier where the serving cell is selected, an early measurement report (EMR) carrier.

20. The method according to any one of claims 17 to 19, wherein an end time of a measurement process performed by the WUR is maintained by a timer, wherein the timer is configured by the network device.

21. The method according to any one of claims 17 to 20, wherein the measurement reference signal is a wake-up signal (WUS); and transmitting the measurement reference signal to the terminal device comprises:
transmitting the WUS to the terminal device, wherein the WUS is a periodically transmitted signal with a synchronization signal function.

22. The method according to claim 21, further comprising:
transmitting second configuration information to the terminal device, wherein the second configuration information is used to configure at least one of: a determination threshold for cell selection corresponding to the WUS, an S criterion corresponding to the WUS, a signal-to-noise ratio (SNR) condition corresponding to the WUS.

23. The method according to any one of claims 17 to 22, wherein a period of discontinuous reception (DRX) corresponding to the WUR is different from a period of DRX corresponding to the main receiver (MR); and/or,
a length of the DRX corresponding to the WUR is different from a length of the DRX corresponding to the MR.

24. The method according to any one of claims 17 to 23, wherein the WUR is further configured to receive at least one of: paging, system information block (SIB).

25. The method according to claim 16, wherein the terminal device is in a radio resource control (RRC) connected state, the WUR is used to perform a first type of measurement process, and a main receiver (MR) is used to perform a second type of measurement process.

26. The method according to claim 25, wherein the first type of measurement process comprises at least one of:
a measurement process for a primary secondary cell in new radio (NR) in an evolved universal terrestrial radio access (E-UTRA)-NR dual connectivity (EN-DC) mode;
a measurement process for a primary secondary cell in long-term evolution (LTE) technology in an NR-E-UTRA dual connectivity (NE-DC) mode;
a measurement process for a primary cell and/or a primary secondary cell of a frequency range FR1 in an NR-NR dual connectivity (NR-DC) mode;
a measurement process for a primary cell and/or a primary secondary cell of the FR1 in an NR carrier aggregation (CA) mode;
beam failure detection (BFD) measurement for a secondary cell.

27. The method according to claim 25 or 26, wherein the second type of measurement process comprises at least one of:
a measurement process for a primary secondary cell in LTE in an EN-DC mode;
a measurement process for a primary secondary cell in NR in an NE-DC mode;
a measurement process for a primary cell and/or a primary secondary cell of FR2 in an NR-DC mode;
a measurement process for a primary cell and/or a primary secondary cell of the FR2 in an NR CA mode;
BFD measurement for a primary cell and/or a primary secondary cell.

28. The method according to any one of claims 25 to 27, wherein a measurement reference signal corresponding to the first type of measurement process is a synchronizing signal and PBCH block (SSB), and a measurement reference signal corresponding to the second type of measurement process is a channel-state information reference signal (CSI-RS); or
a measurement reference signal corresponding to the first type of measurement process is a channel-state information reference signal (CSI-RS), and a measurement reference signal corresponding to the second type of measurement process is a synchronizing signal and PBCH block (SSB).

29. The method according to claim 16, wherein the terminal device is in a radio resource control (RRC) connected state; and in a case where a first condition is met, the terminal device receives the measurement reference signal through the WUR;
wherein the first condition comprises at least one of:
a cell defining (CD)-SSB is within a bandwidth part (BWP);
the terminal device supports a measurement process based on non-cell defining (NCD)-SSB, wherein the NCD-SSB is within a BWP;
the terminal device supports a measurement process based on channel-state information reference signal (CSI-RS), wherein the CSI-RS is within a BWP;
the terminal device supports a measurement process that does not require interruption and based on CD-SSB and/or CSI-RS that are outside a BWP;
the terminal device supports a measurement process that requires interruption and based on CD-SSB and/or CSI-RS that are outside a BWP;
the terminal device supports a measurement process that requires a measurement gap and the reference signal is outside a BWP;
wherein the BWP is an active BWP on the serving cell.

30. The method according to any one of claims 16 to 29, wherein the measurement reference signal comprises at least one of: SSB, CSI-RS, WUS.

31. A measurement apparatus, comprising:
a receiving module, configured to receive a measurement reference signal through a wake-up receiver (WUR), wherein the measurement reference signal is used to measure a signal quality of a serving cell; and
a processing module, configured to determine a measurement result based on the measurement reference signal, wherein the measurement result is used to represent the signal quality of the serving cell.

32. The apparatus according to claim 31, wherein in a case where the terminal device is in a radio resource control (RRC) idle state or inactive state,
the receiving module is further configured to receive first configuration information transmitted by a network device, wherein the first configuration information is used to instruct the terminal device to receive the measurement reference signal through the WUR.

33. The apparatus according to claim 32, wherein the first configuration information is RRC dedicated signaling; or the first configuration information is system information block (SIB) configuration information.

34. The apparatus according to claim 32 or 33, wherein the first configuration information is used to indicate that the WUR is used to receive all of the measurement reference signal in a case where a main receiver (MR) is turned off; or
the first configuration information is used to indicate that the WUR is used to receive the measurement reference signal on a first carrier, wherein the first carrier comprises at least one of: a carrier where the serving cell is selected, an early measurement report (EMR) carrier.

35. The apparatus according to any one of claims 32 to 34, wherein an end time of a measurement process performed by the WUR is maintained by a timer, wherein the timer is configured by the network device.

36. The apparatus according to any one of claims 32 to 35, wherein the measurement reference signal is a wake-up signal (WUS);
the receiving module is configured to receive the WUS through the WUR, wherein the WUS is a periodically transmitted signal with a synchronization signal function.

37. The apparatus according to claim 36, wherein the receiving module is further configured to receive second configuration information transmitted by the network device, wherein the second configuration information is used to configure at least one of: a determination threshold for cell selection corresponding to the WUS, an S criterion corresponding to the WUS, a signal-to-noise ratio (SNR) condition corresponding to the WUS.

38. The apparatus according to any one of claims 32 to 37, wherein a period of discontinuous reception (DRX) corresponding to the WUR is different from a period of DRX corresponding to the main receiver (MR); and/or,
a length of the DRX corresponding to the WUR is different from a length of the DRX corresponding to the MR.

39. The apparatus according to any one of claims 32 to 38, wherein the WUR is further configured to receive at least one of: paging, system information block (SIB).

40. The apparatus according to claim 31, wherein the terminal device is in a radio resource control (RRC) connected state, the WUR is used to perform a first type of measurement process, and a main receiver (MR) is used to perform a second type of measurement process.

41. The apparatus according to claim 40, wherein the first type of measurement process comprises at least one of:
a measurement process for a primary secondary cell in new radio (NR) in an evolved universal terrestrial radio access (E-UTRA)-NR dual connectivity (EN-DC) mode;
a measurement process for a primary secondary cell in long-term evolution (LTE) technology in an NR-E-UTRA dual connectivity (NE-DC) mode;
a measurement process for a primary cell and/or a primary secondary cell in a frequency range FR1 in an NR-NR dual connectivity (NR-DC) mode;
a measurement process for a primary cell and/or a primary secondary cell of the FR1 in an NR carrier aggregation (CA) mode;
beam failure detection (BFD) measurement for a secondary cell.

42. The apparatus according to claim 40 or 41, wherein the second type of measurement process comprises at least one of:
a measurement process for a primary secondary cell in LTE in an EN-DC mode;
a measurement process for a primary and secondary cell in NR in an NE-DC mode;
a measurement process for a primary cell and/or a primary secondary cell of FR2 in an NR-DC mode;
a measurement process for a primary cell and/or a primary secondary cell of the FR2 in an NR CA mode;
BFD measurement for a primary cell and/or a primary secondary cell.

43. The apparatus according to any one of claims 40 to 42, wherein the measurement reference signal corresponding to the first type of measurement process is a synchronization signal and PBCH block (SSB), and a measurement reference signal corresponding to the second type of measurement process is a channel-state information reference signal (CSI-RS); or
a measurement reference signal corresponding to the first type of measurement process is CSI-RS, and a measurement reference signal corresponding to the second type of measurement process is SSB.

44. The apparatus according to claim 31, wherein the terminal device is in a radio resource control (RRC) connected state; and the receiving module is configured to receive the measurement reference signal through the WUR in a case where the first condition is met;
wherein the first condition comprises at least one of:
a cell defining (CD)-SSB is within a bandwidth part (BWP);
the terminal device supports a measurement process based on non-cell defining (NCD)-SSB, wherein the NCD-SSB is within a BWP;
the terminal device supports a measurement process based on CSI-RS, wherein the CSI-RS is within a BWP;
the terminal device supports a measurement process that does not require interruption and based on CD-SSB and/or CSI-RS that are outside a BWP;
the terminal device supports a measurement process that requires interruption and based on CD-SSB and/or CSI-RS that are outside a BWP;
the terminal device supports a measurement process that requires a measurement gap and the reference signal is outside a BWP;
wherein the BWP is an active BWP on the serving cell.

45. The apparatus according to any one of claims 31 to 44, wherein the measurement reference signal comprises at least one of: SSB, CSI-RS, WUS.

46. A measurement apparatus, comprising:
a transmitting module, configured to transmit a measurement reference signal to a terminal device, wherein the measurement reference signal is used to measure a signal quality of a serving cell, and the measurement reference signal is received by the terminal device using a wake-up receiver (WUR).

47. The apparatus according to claim 46, wherein in a case where the terminal device is in a radio resource control (RRC) idle state or inactive state,
the transmitting module is further configured to transmit first configuration information to the terminal device, wherein the first configuration information is used to instruct the terminal device to receive the measurement reference signal through the WUR.

48. The apparatus according to claim 47, wherein the first configuration information is RRC dedicated signaling; or the first configuration information is system information block (SIB) configuration information.

49. The apparatus according to claim 47 or 48, wherein the first configuration information is used to indicate that the WUR is used to receive all of the measurement reference signal in a case where a main receiver (MR) is turned off; or
the first configuration information is used to indicate that the WUR is used to receive the measurement reference signal on a first carrier, wherein the first carrier comprises at least one of: a carrier where the serving cell is selected, an early measurement report (EMR) carrier.

50. The apparatus according to any one of claims 47 to 49, wherein an end time of a measurement process performed by the WUR is maintained by a timer, wherein the timer is configured by the network device.

51. The apparatus according to any one of claims 47 to 50, wherein the measurement reference signal is a wake-up signal WUS;
the transmitting module is configured to transmit the WUS to the terminal device, where the WUS is a periodically transmitted signal with a synchronization signal function.

52. The apparatus according to claim 51, wherein the transmitting module is further configured to transmit second configuration information to the terminal device, wherein the second configuration information is used to configure at least one of: a determination threshold for cell selection corresponding to the WUS, an S criterion corresponding to the WUS, a signal-to-noise ratio (SNR) condition corresponding to the WUS.

53. The apparatus according to any one of claims 47 to 52, wherein a period of discontinuous reception (DRX) corresponding to the WUR is different from a period of DRX corresponding to the main receiver (MR); and/or,
a length of the DRX corresponding to the WUR is different from a length of the DRX corresponding to the MR.

54. The apparatus according to any one of claims 47 to 53, wherein the WUR is further configured to receive at least one of: paging, system information block (SIB).

55. The apparatus according to claim 46, wherein the terminal device is in a radio resource control (RRC) connected state, the WUR is used to perform a first type of measurement process, and a main receiver (MR) is used to perform a second type of measurement process.

56. The apparatus according to claim 55, wherein the first type of measurement process comprises at least one of:
a measurement process for a primary secondary cell in new radio (NR) in an evolved universal terrestrial radio access (E-UTRA)-NR dual connectivity (EN-DC) mode;
a measurement process for a primary secondary cell in long-term evolution (LTE) technology in an NR-E-UTRA dual connectivity (NE-DC) mode;
a measurement process for a primary cell and/or a primary secondary cell of a frequency range FR1 in an NR-NR dual connectivity (NR-DC) mode;
a measurement process for a primary cell and/or a primary secondary cell of the FR1 in an NR carrier aggregation (CA) mode;
beam failure detection (BFD) measurement for a secondary cell.

57. The apparatus according to claim 55 or 56, wherein the second type of measurement process comprises at least one of:
a measurement process for a primary secondary cell in LTE in an EN-DC mode;
a measurement process for a primary secondary cell in NR in an NE-DC mode;
a measurement process for a primary cell and/or a primary and secondary cells of FR2 in an NR-DC mode;
a measurement process for a primary cell and/or a primary secondary cell of the FR2 in an NR CA mode;
BFD measurement for a primary cell and/or a primary secondary cell.

58. The apparatus according to any one of claims 55 to 57, wherein a measurement reference signal corresponding to the first type of measurement process is a synchronizing signal and PBCH block (SSB), and a measurement reference signal corresponding to the second type of measurement process is a channel-state information reference signal (CSI-RS); or
a measurement reference signal corresponding to the first type of measurement process is a channel-state information reference signal (CSI-RS), and a measurement reference signal corresponding to the second type of measurement process is a synchronizing signal and PBCH block (SSB).

59. The apparatus according to claim 46, wherein the terminal device is in a radio resource control (RRC) connected state; and in a case where a first condition is met, the terminal device receives the measurement reference signal through the WUR;
wherein the first condition comprises at least one of:
a cell defining (CD)-SSB is within a bandwidth part (BWP);
the terminal device supports a measurement process based on non-cell defining (NCD)-SSB, wherein the NCD-SSB is within a BWP;
the terminal device supports a measurement process based on channel-state information reference signal (CSI-RS), wherein the CSI-RS is within a BWP;
the terminal device supports a measurement process that does not require interruption and based on CD-SSB and/or CSI-RS that are outside a BWP;
the terminal device supports a measurement process that requires interruption and based on CD-SSB and/or CSI-RS that are outside a BWP;
the terminal device supports a measurement process that requires a measurement gap and the measurement reference signal is outside a BWP;
wherein the BWP is an active BWP on the serving cell.

60. The apparatus according to any one of claims 46 to 59, wherein the measurement reference signal comprises at least one of: SSB, CSI-RS, WUS.

61. A communication device, wherein the communication device comprises a processor and a memory, the memory storing a computer program, wherein the processor executes the computer program to perform the method according to any one of claims 1 to 15, or to perform the method according to any one of claims 16 to 30.

62. A computer-readable storage medium, wherein the storage medium stores a computer program for execution by a processor to perform the method according to any one of claims 1 to 15, or to perform the method according to any one of claims 16 to 30.

63. A chip, wherein the chip comprises a programmable logic circuit and/or program instructions, wherein the programmable logic circuit and/or the program instructions, when the chip is operated, are used to perform the method according to any one of claims 1 to 15, or to perform the method according to any one of claims 16 to 30.

64. A computer program product, wherein the computer program product comprises computer instructions stored in a computer-readable storage medium, and a processor reads and executes the computer instructions from the computer-readable storage medium to perform the method according to any one of claims 1 to 15, or to perform the method according to any one of claims 16 to 30.
